# EUROPÄISCHE PATENTSCHRIFT

(11) **EP 2 212 225 B1**
(45) Veröffentlichungstag und Bekanntmachung des Hinweises auf die Patenterteilung: **15.08.2012**
(21) Anmeldenummer: 08849036.2
(22) Anmeldetag: 14.11.2008
(51) Int. Cl.: B65G 47/08

(54) **MEHRZUGGRUPPIERER**
MULTIPLEX GROUPING DEVICE
DISPOSITIF DE REGROUPEMENT À PLUSIEURS VOIES

(30) Priorität: 17.11.2007 DE 102007054956
(43) Veröffentlichungstag der Anmeldung: 04.08.2010
(73) Patentinhaber: ELAU GmbH, 97828 Marktheidenfeld (DE)
(72) Erfinder: VOLK, Rainer, 97264 Holzkirchhausen (DE); UHL, André, 97295 Waldbrunn (DE); KRÄMER, Carsten, 97828 Marktheidenfeld (DE)
(74) Vertreter: Pöhner, Wilfried Anton
(86) Internationale Anmeldenummer: PCT/DE2008/001885
(87) Internationale Veröffentlichungsnummer: WO 2009/062493

(56) Entgegenhaltungen:
- WO-A-2007/055112
- US-B1- 6 286 290

## Beschreibung

Die Erfindung bezieht sich auf einen Mehrzuggruppierer zum Gruppieren von sequentiell zugeführten Gegenständen gemäß dem Oberbegriff des Anspruchs 1 sowie auf eine Anwendung eines solche Mehrzuggruppierer.

Auf aktuellem Stand der Technik können mehrere, miteinander verknüpfte Maschinen mit zum Teil komplexen Bewegungsabläufen, wie z. B. Verpackungsmaschinen, häufig die eintreffenden Gegenstände nur dann störungsfrei und mit der maximal möglichen Geschwindigkeit bearbeiten, wenn die Gegenstände in gleichmäßigem Abstand zueinander oder in Gruppen mit einem bestimmten Abstandsmuster angeliefert werden.

Deshalb werden vor solchen komplexen Maschinen so genannte Gruppierungsstationen angeordnet, die den geforderten Abstand oder das Geforderte Abstandsmuster einstellen. Das am häufigsten verwendete Verfahren ist die Hintereinanderschaltung von mehreren Transportbändern. Das erste Band fungiert als Stauband, indem seine Geschwindigkeit soweit gegenüber dem eintreffenden Strom der Gegenstände reduziert wird, dass alle Gegenstände auf dem Stauband aneinander stoßen, wobei sie von seitlichen Begrenzungswänden daran gehindert werden, zur Seite hin auszubrechen. Auf wenigstens einem anschließenden Band mit höherer Geschwindigkeit werden die Gegenstände wieder auseinander gezogen und sind dann alle gleichmäßig zueinander beabstandet.

Ein derartiger Mehrzuggruppierer gemäß dem Oberbegriff des Anspruchs 1 ist bereits aus US 6286290B1 bekannt.

Während des Überganges von einem Band auf das nächste berührt der Gegenstand vorübergehend beide benachbarten Bänder. Da deren Geschwindigkeit jedoch unterschiedlich ist, gleitet der Gegenstand auf wenigstens einem der Bänder. Damit er in dieser Phase nicht beschädigt wird, darf die Reibung zwischen Gegenstand und Band nicht allzu hoch sein. Andererseits darf die Reibung jedoch nicht derart niedrig werden, dass der Gegenstand vom Band nicht mehr ausreichend beschleunigt und verzögert wird. Daraus ergibt sich der Nachteil, dass nicht jeder Gegenstand mit jedem beliebigen Bandmaterial kombiniert werden kann.

Ein weitere Einschränkung ist, dass abhängig von der Geometrie der Ware der durch den Übergang von einem auf das nächste Band erzielte Abstand nicht ausreichend groß sein kann, so dass ein weiteres Band dazwischen geschaltet werden muss. Die Verwendung von bis zu elf sogenannten Korrekturbändern ist bekannt.

Ein weiteres Problem ist bei diesem Prinzip, dass bei einer größeren Lücke im Strom der eintreffenden Gegenstände die bremsende Wirkung des Staubandes nicht ausreicht, um diese große Lücke zu schließen, woraufhin auch beim Ausgeben der Gegenstände ein Abstand entsteht, der größer ist als der eigentlich geforderte Wert.

Dann führt die nachfolgende Maschine einen so genannten Leertakt durch, z. B. schneidet eine Maschine, die Gegenstände in schlauchartige Beutel aus Kunststoff verpackt, einen Kunststoffabschnitt zu und formt daraus einen Schlauchbeutel, der jedoch keine Ware enthält. Wenn die nächste Station ein Schrumpfofen ist, in dem die Folie durch Erwärmung soweit schrumpft, dass sie sich an die Gegenstände anlegt, kann ein Beutel im Schrumpfofen ohne die Kühlung einer im Beutel enthaltenen Ware vollständig zusammenschmelzen und sich dabei so stark erwärmen, dass er in Brand gerät.

In diesem Anwendungsbeispiel bewirkt ein Leertakt, dass die gesamte Verarbeitungsstraße angehalten, der zerschmolzene Beutel entfernt und die Anlage wieder hochgefahren werden muss, was die mittlere Verarbeitungsgeschwindigkeit empfindlich beeinträchtigt.

Weitere Nachteile des bekannten Standes der Technik sind die begrenzte Flexibilität aufgrund der geometrischen Bedingungen: Die Korrekturbänder sind in ihren Abmessungen so zu wählen, dass sie mit den entsprechenden Produktgrößen harmonieren, wobei für größere Produkte mehrere Bänder zusammengeschaltet werden können. In jedem Fall ist der Platzbedarf hoch, da die Bänder in Reihen hintereinander angeordnet sind und die Länge eines jeden Bandes auf die Abmessung des kleinsten und des größten Produkts abgestimmt werden muss.

Weitere Einschränkungen sind, dass die Korrekturbänder auf die Charakteristik der Folgemaschine abgestimmt werden müssen, wenn deren Geschwindigkeit nur in einem sehr geringen Prozentsatz des Nominalwertes geändert werden kann.

Auf diesem Hintergrund ist die Aufgabe der Erfindung ein universell anwendbarer, kompakter Mehrzuggruppierer, der Ströme von Gegenständen der verschiedensten Größe und Charakteristik, die in ungleichmäßigen Abständen eintreffenden, in einen Strom von Gegenständen verwandelt, die gleichmäßige Abstände zueinander aufweisen oder in Gruppen mit jeweils innerhalb einer Gruppe gleichmäßigem Abstand oder einem bestimmten Abstandsmuster aufgeteilt sind.

Als Lösung stellt die Erfindung einen Mehrzuggruppierer gemäß Anspruch 1 vor.

Die Kernidee der Erfindung ist, dass jeder Zug beim Beladen synchron zur Geschwindigkeit der eintreffenden Gegenstände bewegt wird und danach auf die Entladestation als Master für die Geschwindigkeit umgeschaltet wird, sich also nunmehr synchron zur Geschwindigkeit der Entladung in einer Entladestation, wie z.B. einer Verpackungsmaschine bewegt, wobei die Pausen zwischen zwei Entladevorgängen zur Einstellung des erforderlichen Abstandes genutzt werden, der gesamte Zug also kurzzeitig gegenüber der Synchrongeschwindigkeit verzögert oder beschleunigt wird.

Die momentane Geschwindigkeit des Zuges schwankt also beim Entladen stets im Takt der Entladevorgänge. Jedoch ist der langfristige Mittelwert der Geschwindigkeit des eintreffenden Gegenstandsstromes identisch mit den langfristigen Mittelwerten der Geschwindigkeit der Gegenstände innerhalb des erfindungsgemäßen Mehrzuggruppierers und der Entladestation, da weder der Gruppierer noch die Entladestation die Gegenstände speichern oder puffern.

Deshalb ist es sinnvoll, die gesamte, mittlere Geschwindigkeit in Abhängigkeit von derjenigen Maschine zu bestimmen und zu verändern, die sich im Verhältnis zu den anderen, damit verknüpften Maschinen nur sehr langsam und nur in sehr geringem Umfang in ihrer Geschwindigkeit ändern lässt. In den Grenzen dieser einheitlichen, mittleren Geschwindigkeit regelt dann die Steuerung des erfindungsgemäßen Mehrzuggruppierers die Geschwindigkeit ihrer einzelnen Züge so, dass die folgenden drei Kriterien erfüllt werden, nämlich:
- Gleitungsfreie Beladung des Zuges,
- Gleitungsfreie Entladung des Zuges und
- Einstellung des geforderten Abstandsmusters zwischen den Gegenständen beim Entladen.

Der entscheidende Vorteil eines erfindungsgemäßen Mehrzuggruppierers ist also, dass jeder Gegenstand bei der Übergabe von der Beladestation auf den Zug und bei der Entladung vom Zug in die Entladestation frei von der Reibung bei Gleitvorgängen und damit auf die denkbar schonendste Weise bewegt werden kann. Damit wird das verlust- und schadensfreie Handling auch von sehr empfindlichen Gegenständen wie z.B. noch nicht ausgehärteten Produkten oder noch unverschlossenen Behältern mit Flüssigkeiten beschleunigt oder überhaupt erst ermöglicht. Jeder Träger nimmt jeden Gegenstand sicher mit und das Risiko von ungewolltem Verrutschen der Gegenstände ist minimiert.

Damit jeder Zug auf die gesamte Breite des Warenstromes zugreifen kann, reicht die Breite seiner Träger über die gesamte Breite des eintreffenden Gegenstandsstromes hinweg.

Jeder Zug wird von seinem eigenen, regelbaren Antrieb mit einem zugehörigen Drehzahlregler bewegt, der seinen Drehzahlsollwert von einer zentralen Steuerung empfängt. Diese Steuerung wertet die Meldungen des Zuführgebers über das Eintreffen von Gegenständen aus und bildet daraus in Abhängigkeit von den jeweils geforderten Abständen oder Abstandsmustern der Gegenstände die Drehzahlsollwerte für alle Antriebe.

Ein wesentlicher Unterschied des erfindungsgemäßen Mehrzuggruppierer zu bisherigen Gruppierern mit hintereinander geschalteten Bändern ist, dass sich der Abstand bei der Vereinzelung der Gegenstände nicht mehr indirekt aus dem Geschwindigkeitsunterschied von zwei benachbarten Bändern sowie dem jeweiligen Haftreibungsund Gleitreibungskoeffizient der Gegenstände auf den Bändern ergibt, sondern unter direktem, mechanischen Kontakt des Trägers mit dem Gegenstand zwangsweise und damit exakt vorgegeben wird.

Ein weiterer, vorteilhafter Unterschied ist, dass anstelle von zuvor bis zu elf Korrekturbändern eine einzige Baugruppe ausreicht. Innerhalb dieser Baugruppe läuft der Zyklus einer Gruppierung wie folgt ab:
In der Nähe der Beladestation wird von der Steuerung ein noch unbeladener Zug bereitgehalten. Der Zuführgeber meldet die Geschwindigkeit der eintreffenden Gegenstände an die Steuerung, die daraufhin den Zug auf die Geschwindigkeit des eintreffenden Gegenstandes beschleunigt und mit dieser Geschwindigkeit durch die Beladestation fahren lässt. Dabei werden die eintreffenden Gegenstände in die Träger des Zuges geschoben. Bei diesem sehr einfachen Verfahren ist jedoch die Phasenlage zwischen Träger und eintreffendem Gegenstand unbestimmt.

Wenn der Träger als Platte oder als Segment eines in Bewegungsrichtung orientierten Profilsegmentes gestaltet ist, kann die Phasenlage jedoch unerheblich sein. Es gibt Konfigurationen, bei denen nicht wichtig ist, an welchem Punkt des Trägers in Bewegungsrichtung der Gegenstand aufgelegt wird. Für solche Fälle reicht die Erfassung der Geschwindigkeit der eintreffenden Gegenstände.

Dann ist ein Zuführgeber ausreichend, der mechanisch mit der Beladestation verbunden ist und elektrisch von der Steuerung ausgelesen wird. Aber auch andere Arten der Geschwindigkeitsmessung sind möglich.

Falls die Träger eines Zuges jedoch so geformt sind, dass die Gegenstände in einem bestimmten Bereich oder sogar in einem bestimmten Punkt aufgelegt, eingehängt oder eingesteckt werden müssen, muss der Träger jeweils eine bestimmte Position in Bezug auf den eintreffenden Gegenstand einnehmen, also in eine bestimmte Phasenlage gebracht werden.

Es ist für stationäre Betriebszustände unter Umständen denkbar, die Phasenlage von einem Bedienmann manuell abgleichen zu lassen. Falls es dabei jedoch zu unerwünschten Beschädigungen des Gegenstandes kommen könnte, muss ein zusätzlicher Sensor installiert werden, der jeden eintreffenden Gegenstand erfasst.

Sobald dieser Sensor das Eintreffen eines Gegenstandes in die Beladungsstation an die Steuerung gemeldet hat, wird ein freier Träger eines Zuges möglichst nahe an die Beladungsstation herangefahren und so rechtzeitig auf die Geschwindigkeit des eintreffenden Gegenstandes beschleunigt, dass er beim Erreichen des Gegenstandes auch dessen Geschwindigkeit und Position erreicht hat. Dadurch kann der Phasenwinkel zwischen Gegenstand und Träger auf einen optimalen Übergang des Gegenstandes in den Träger hinein abgestimmt werden.

Auf diese Weise werden alle gewünschten Träger eines Zuges mit Gegenständen beladen. Dabei sind auch Sonderfälle denkbar in denen die Träger unterschiedlich beladen werde, also z.B. ein Träger doppelt oder gar nicht bestückt wird.

Sobald die Beladung abgeschlossen ist, wird der Zug vom Zuführgeber als Master für seine Geschwindigkeit abgeschaltet und auf den Abführgeber einer Entladestation als neuen Master aufgeschaltet. Der Begriff Master beschreibt einen Geber, der von der Steuerung erfasst und ausgewertet wird und die Quelle für den Sollwert ist, der in Steuerung gebildet wird.

Beim Entladen ist die einfachste Konfiguration der Entladestation eine stufenlose Variante, bei der der Gegenstand in jeder beliebigen Position in die Entladestation abgeladen werden kann. In dieser Ausführungsform reicht an der Entladestation die Erfassung von deren Geschwindigkeit, z.B. durch einen Geber, der mechanisch mit der Entladestation verbunden ist und elektrisch von der Steuerung auswertbar ist. Weil dieser Geber vom Ablauf her bei der Abführung der gruppierten Gegenstände angeordnet ist, wird er in diesem Text der Übersichtlichkeit halber auch als Abführgeber bezeichnet.

Ein wesentliches Merkmal der Erfindung ist, dass beim eigentlichen Entladevorgang, bei dem der zu entladende Gegenstand sowohl noch den Träger als auch schon die Entladestation berührt, die Geschwindigkeit von Träger und Entladestation gleich ist, so dass der Gegenstand ohne störendes Gleiten und frei von zusätzlichen Stößen vom Träger in die Entladestation wechseln kann.

Bis der nächste Gegenstand in diejenige Bewegungsphase eintritt, in der er sowohl noch den Träger als auch schon die Entladestation berührt, besteht keine direkte Verbindung zwischen Träger und Entladestation. In dieser Zeitspanne wird die Aufgabe der Gruppierung ausgeführt, d.h. die Geschwindigkeit des Zuges wird vorübergehend durch die Steuerung erhöht oder reduziert, so dass die Gegenstände in der Entladestation im gewünschten Abstand eintreffen.

Dabei muss in der Steuerung der Abstand der Gegenstände innerhalb des Zuges bekannt sein, entweder durch die baulich vorgegebene Form der Träger des Zuges oder - bei einem in Bewegungsrichtung gleichmäßig durchlaufenden Profil der Träger - durch Speicherung der Position der Gegenstände beim Beladen oder durch Abtasten der Position der Gegenstände auf den Trägern mittels eines Sensors.

Das kann eine Lichtschranke sein, die eine sehr genaue Erkennung ermöglicht. Oder ein Kamerasystem, das zusätzlich noch die Orientierung der Gegenstände erfassen kann. Prinzipiell sind jedoch alle anderen bekannten Sensoren wie Schaltkontakte, Infrarotsensoren, Näherungsinitiatoren oder andere geeignet, sofern deren Genauigkeit für die jeweilige Anwendung ausreicht.

Jeder Gegenstand wird also von der Steuerung über den Drehzahlregler und den Antrieb aus der positionssynchronen Bewegung heraus solange beschleunigt bzw. verzögert, bis der gewünschte Abstand zum vorausgehenden Gegenstand erreicht ist, wobei der für den Geschwindigkeitsausgleich noch erforderliche Verfahrweg berücksichtigt wird. Dann wechselt die Steuerung wieder zurück zu der synchronen Drehzahl, die für die optimale Entladung erforderlich ist.

In einer solchen Konfiguration kann eine erfindungsgemäße Gruppierungsstation die Gegenstände nicht nur in jeweils gewünschte Abstände, sondern auch in einen bestimmten Phasenwinkel in Bezug auf eine nachfolgende Maschine bringen. Dabei ist es ein wesentliches Merkmal der Erfindung, dass während des Entladens eines Zuges die nachfolgende Maschine der Master für das Transportband der Gruppierungsstation ist.

Weil jedoch beim Beladen des Zuges dessen Master der Zuführgeber ist, muss von einem zum anderen Master umgeschaltet werden. In einer vorteilhaften Ausführungsvariante begrenzt die Steuerung während des Umschaltens eine eventuelle Geschwindigkeits- und Beschleunigungsänderung, sie interpoliert also den Übergang.

Für die Verbindung aller Träger eines Zuges ist ein Endlosband bewährt. In der einfachsten Form ist das Endlosband über zwei Umlenkrollen gespannt, von denen eine angetrieben wird. Die Aufhängung der beiden Umlenkrollen reicht als Stütze für das Endlosband. Wenn ein weiteres Endlosband parallel dazu verläuft, kann es mit auf den Stützen des ersten Endlosbandes gelagert werden.

Wenn die Endlosbänder und die Achsen der Umlenkrollen horizontal angeordnet sind, weist in der einfachsten Form eine Hälfte der Träger auf dem Endlosband nach oben und die andere Hälfte nach unten. Die nach oben weisenden Träger halten die darauf abgelegten Gegenstände durch die Gravitation. Wenn unmittelbar neben oder oberhalb der Entladestation eine Umlenkrolle angeordnet ist, fallen dort eintreffende Gegenstände durch die Krümmung der Umlenkrolle und durch die Schwerkraft von den Trägern auf dem Endlosband in die Entladestation. In dieser Konfiguration kann auf separate Träger verzichtet werden sondern das Endlosband selber als Träger genutzt werden.

Wenn das Endlosband jedoch senkrecht verläuft, sind Träger erforderlich, die die Gegenstände fixieren. Je nach deren Form und Konstruktion kann das Endlosband auch sowohl vertikal wie horizontal verlaufen.

Bei einer Ausbildung der Träger ähnlich wie Gondeln einer Seilbahn können die Antriebsachsen der Umlenkrollen für das Endlosband auch senkrecht angeordnet werden. Prinzipiell kann ein erfindungsgemäßer Mehrzuggruppierer auch als Seilbahn aufgebaut werden, wobei nur zu beachten ist, dass das Durchhängen des Seils und eine eventuelle last- oder temperaturabhängige Längung des Seils durch entsprechende Istwert-Geber an die Steuerung übermittelt werden muss, um den Positions-Istwert jeweils korrekt zu erfassen.

Dieses Problem wird dadurch entschärft oder eliminiert, dass sich jeder Träger direkt oder indirekt auf wenigstens einer Schiene abstützt, die in einer endlosen schleife zwischen Beladestation und Entladestation verläuft. Auf dieser Schiene verfahren die Träger dann ähnlich wie die Wagen eines Eisenbahnzuges auf ihrem Gleis. Als Antrieb dient dann ein parallel zur Schiene umlaufendes Endlosband. Wenn dessen Elastizität im Rahmen der gewünschten Genauigkeit vernachlässigbar ist, ist durch die Position des Endlosbandes auch die Position aller Träger bestimmbar.

Es ist alternativ denkbar, einen erfindungsgemäßen Mehrzuggruppierer auch aus Eisenbahnzügen mit je einer Lokomotive als Antrieb und daran angehängten Wagen als Träger zu konfigurieren. Dann müssen alle Züge auf demselben Gleis verfahren, das Belade- und Entladestation miteinander verbindet. Jede Lokomotive muss über einen Geber der Steuerung ihre aktuelle Position mitteilen. Die Steuerung wertet die Geber in Belade- und Entladestation aus und formt unter Beachtung der für die Entladestation erforderlichen Gruppierung jeweils den korrekten Sollwert für jede der Lokomotiven. Dazu muss in der Steuerung gespeichert sein, welche Länge die Wagen, also die Träger, des Zuges aufweisen. Falls der Zug verschiedene Wagen (Träger) enthält, müssen in der Steuerung nicht nur dessen Längen hinterlegt werden, sondern auch die jeweilige Position des Wagens im Zug.

Ein Zug kann entweder zwischen allen Trägern gleiche Abstände aufweisen oder die Abstände entsprechen einem bestimmten Muster, z. B. dem Packschema eines besonderen Kartons in einer Verpackungsmaschine hinter der Entladestation. Der darauf eingestellte, feste Abstand zwischen benachbarten Trägern muss der Steuerung mitgeteilt und in ihr eingespeichert werden.

Als eine weitere, zusätzliche Option können die Träger durch lösbare Verbindungen, wie z. B. Schrauben oder Stifte, die mit Rastnasen gesichert sind, mit dem Endlosband verbunden werden. Dann kann in Abhängigkeit von der Größe des zu verpackenden Gegenstandes und der gewählten Verpackung auch die Anzahl und der Abstand der Träger variiert werden. Bei dieser Variante wird i. d. R. das Endlosband eine erheblich größere Anzahl von Befestigungspunkten aufweisen, als tatsächlich Träger vorhanden und mit dem Endlosband verbunden sind.

In jedem Befestigungspunkt kann ein Träger lösbar mit dem Endlosband verbunden werden. Diese Verbindung muss sowohl in der Arbeitsebene als auch senkrecht dazu in sich verdrehsteif sein, so dass der Träger während der Bewegung nicht ungewollt verschwenkt wird. Insbesondere bei vergleichsweise schmalen Endlosbändern, sollte jeder Verbindungspunkt eines Trägers Vorteilhafterweise in zwei zueinander beabstandete Verbindungselemente aufgeteilt werden, die dann kaum mehr auf Torsion beansprucht werden.

Unter dem Begriff "Endlosband" sind hier sowohl Transportbänder zu verstehen, auf denen die zu befördernden Gegenstände zumindest teilweise aufliegen als auch andere Ausführungsformen, die dann nicht mehr in direktem Kontakt mit dem zu transportierenden Gegenstand stehen, sondern nur noch über den Träger damit verbunden sind. Dabei können die Gegenstände z.B. auf dem flächig ausgebildeten Endlosband entlang gleiten und werden nur vom Träger vorwärts geschoben. In diesem Fall sollte der Haftreibungsbeiwert der Oberfläche des Endlosbandes möglichst klein sein.

Eine mögliche Ausführungsform des Endlosbandes sind Zahnriemen, Ketten oder kugelbestückte Seile, wobei die Träger über Platten, Stege, Stangen oder ähnliche Konstruktionen mit dem Endlosband verbunden sind.

Ein wichtiges Merkmal dieser oder ähnlicher Ausführungsformen ist die schlupffreie Verbindung zwischen Antrieb und davon bewegtem Träger. Dann reicht ein Positionsistwertgeber am Motor aus, um die Position der einzelnen Gegenstände von der Steuerung zu erfassen.

Falls das Endlosband als Seil oder Flachriemen ausgeführt ist, kann Schlupf zwischen dem Antrieb und den davon bewegten Gegenständen auftreten. Bei solchen Ausführungsvarianten ist wenigstens ein zusätzlicher Geber an wenigstens einem Träger erforderlich, der von der Steuerung erfasst wird und über den in der Steuerung eine Differenz zwischen dem vom Geber am Antrieb gemeldeten Positionsistwert und dem tatsächlichen Positionsistwert als Korrekturwert eingelesen wird.

Die Achsen der Antriebe können waagerecht oder senkrecht ausgerichtet sein. Sinnvollerweise ist die Ausrichtung des Antriebes an die gewählte Form der Endlosbänder und der Träger angepasst.

Die Erfindung bevorzugt eine schlupffreie Verbindung zwischen Träger und Antrieb, weil dann am Antrieb der Geber angeflanscht werden kann, der von der Steuerung ausgewertet wird und vom Drehzahlregler als Istwertgeber benötigt wird.

Bei der mechanischen Konfiguration kann es von Vorteil sein, wenn wenigstens ein Antrieb zusammen mit einem Drehzahlregler in einem gemeinsamen Gehäuse eingebaut ist.

Alternativ kann der Träger als Fach, als Wanne, als Mulde, als Eimer oder als Schaufel ausgebildet werden. Vorteilhaft ist, dass der Haftreibungsbeiwert der Oberfläche nur beim Aus- und Einladen relevant ist, während der Bewegung ist der Gegenstand jedoch mechanisch durch die Form der Träger fixiert. Wenn der Träger jedoch nur eine Platte ist, darf der Gegenstand darauf während der Bewegung nicht verrutschen, da dieser Fehler von der Steuerung nicht erfasst wird. Eine Fehlfunktion wäre die Folge.

Ein erfindungsgemäßer Mehrzuggruppierer verfügt in jedem Fall über eine Steuerung, die die Drehzahlsollwerte für alle vorhandenen Antriebe bildet, und zwar in Abhängigkeit von den jeweils für die Gruppierung vorgegebenen Abständen. Um diese Werte eingeben zu können, kann eine Schnittstelle der Steuerung zu anderen, an der Maschine bereits vorhandenen Eingabemedien, wie z. B. einem PC mit Tastatur und Bildschirm genutzt werden. Oder das Steuergerät wird mit einer eigenen, dezentralen Eingabeeinheit für diese Abstände ausgerüstet.

Dafür sind sämtliche bekannten Einrichtungen, wie Zifferntastaturen, Daumenradschalter, Tastenfelder entweder rein numerisch oder auch alphanumerisch, wie z. B. für PCs üblich, oder Touchscreens üblich. Eine Erweiterung wäre die Anzeige von Soll- und Ist-Werten auf einem einfachen LED-Display bis hin zu einem Flachbildschirm.

Als weitere sinnvolle Ausführungsvariante können in einen erfindungsgemäßen Mehrzuggruppierer zusätzliche Stationen integriert werden, wofür alle Endlosbänder entsprechend verlängert werden müssen. Zusätzlich denkbar sind eine beliebige Bearbeitungsstation oder eine Wendestation oder eine weitere Entladestation oder eine weitere Beladestation. Ein Gegenstand könnte also noch zusätzlich z.B. beschriftet, zerteilt, gewendet oder vorzeitig aus der Gruppierungsstation ausgeschleust werden. Oder es werden noch zusätzliche Gegenstände in einen Träger eingebracht.

Dabei können die Stationen sehr verschieden gestaltet werden. So ist zum Beispiel für eine Beladestation die Ausführung als Transportband, Eimerkette, Kette oder Rad mit Trägern für Gegenstände, als Schieber, Förderschnecke, Handlingsystem, Roboter, Katapult oder als Rutsche möglich.

Bei der Anwendung eines erfindungsgemäßen Mehrzuggruppierers gibt die Steuerung in einem begrenzten Zeitraum geänderte Drehzahlsollwerte an den Drehzahlregler des Antriebs von mindesten einem der Züge vor, wobei Betrag und Dauer der Drehzahländerung so bemessen sind, dass sich der für die gewünschte Gruppierung der Gegenstände erforderliche Abstand zwischen zwei Gegenständen oder zwischen zwei Gruppen von Gegenständen ergibt.

Auf diese Weise kann z.B. ein Strom von Gegenständen, die in verschiedenen, beliebigen Abständen eintreffen, in einen Strom von Gegenständen mit jeweils gleichen, vorwählbaren Abständen umgewandelt werden.

Alternativ kann das Ergebnis auch ein Strom von Gruppen von Gegenständen sein, wobei innerhalb der Gruppe die Abstände jeweils gleich sind. Dabei können sich die Abstände innerhalb der Gruppe gemäß einem vorgewählten Muster voneinander unterscheiden.

Möglich ist auch, dass bestimmte, vordefinierte Träger nicht beladen werden. In einer anderen Variante wird für jeden neu eintreffenden Gegenstand ein unbeladener Träger rechtzeitig bereitgestellt.

Zur Nutzung eines erfindungsgemäßen Mehrzuggruppierers können in einer zusätzlichen Beladestation weitere Gegenstände auf zuvor noch freie Träger oder in bereits zum Teil bestückte Träger dazu gelegt werden.

Es ist aber auch denkbar, dass eine oder mehrere zusätzliche Stationen von wenigstens einem Gegenstand ohne dortige Aktivität durchfahren werden.

Zum Beispiel in Notsituationen oder zum schnellen Entleeren einer erfindungsgemäßen Gruppierungsstation ist es eine vorteilhafte Zusatzfunktionalität, dass eine nur teilweise gruppierte und/oder bearbeitete Gruppe von Gegenständen in der nächsten, erreichbaren Entladestation herausgefahren wird und die im normalen Zyklus vorgesehene weitere Beladung und/oder Bearbeitung der Gegenstände unterbleibt.

Als Kollisionsschutz zwischen zwei benachbarten Gruppen von Gegenständen ist es hilfreich, dass der Antrieb eines Endlosbandes sofort gestoppt wird, wenn eine von diesem Antrieb bewegte Gruppe von Gegenständen auf eine andere Gruppe von Gegenständen aufzulaufen droht, deren Bearbeitung oder Beladung noch nicht abgeschlossen ist.

Wenn mehrere Zügen vor einer Station warten müssen, weil sich in dieser Station noch ein Zug befindet und seine Träger dort abarbeitet, dann ist es sinnvoll, dass alle wartenden Züge auf den Geber dieser Station als Master umgeschaltet werden und sich synchron zu dem in der Station befindlichen Zug bewegen. Dabei ist ein kleiner Sicherheitsabstand zwischen den einzelnen Zügen zum Ausgleich von Regelhüben sinnvoll. Auf diese Weise können wartende Züge als eine Pufferung des Stromes der Gegenstände genutzt werden.

Möglich ist auch, dass ein Träger im Stillstand mit mehr als einem Gegenstand beladen wird und erst nach abgeschlossener Beladung weiter bewegt wird. Dabei kann die Beladung in einer bestimmten Reihenfolge erfolgen. Eine Anwendung könnte also die Bestückung eines Trägers mit Pralinen stets in der Reihenfolge "Marzipan, Nuss und Nougat" sein.

Im Folgenden sollen weitere Einzelheiten und Merkmale der Erfindung anhand eines Beispiels näher erläutert werden. Dieses soll die Erfindung jedoch nicht einschränken, sondern nur erläutern. Es zeigt in schematischer Darstellung:

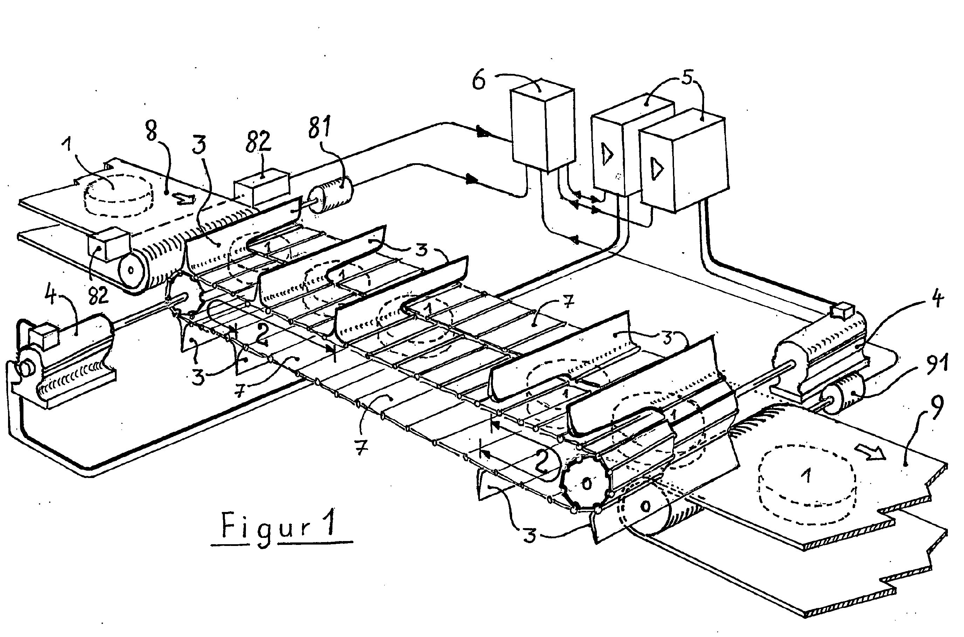

Figur 1: Schrägbild eines Mehrzuggruppierers mit zwei Zügen

Im Einzelnen zeigt die Figur 1 zwei parallel verlaufende Endlosbänder 7, die jeweils die Träger 3 eines Zuges 2 verbinden. Beide Züge 2 bestehen aus je einem Endlosband 7, das über je zwei Umlenkrollen gespannt ist und von je einem Antrieb 4 bewegt wird. Durch ihre Formung als Gliederketten tragen sie direkt die Gegenstände 1, hier als flache Zylinder wie bei einem Käselaib ausgebildet.

Jeder der beiden Antriebe 4 ist mit seinem Drehzahlregler 5 verbunden und zwar mit einem dick eingezeichneten Leistungskabel, das die Energie zur Versorgung der Antriebe 4 liefert. Der Drehzahlregelkreis wird über Geber geschlossen, die in diesem Beispiel mechanisch mit dem Antrieb 4 verbunden sind, und zwar dadurch, dass sie an der von der Abtriebswelle abgewandten Seite angeflanscht sind. Die Signale der Geber werden über eine Signalleitung an die Drehzahlregler 5 übermittelt, die in der Zeichnung parallel zum Leistungskabel eingetragen ist.

Jeder Drehzahlregler 5 erhält aus der Steuerung 6 einen Lagesollwert, wobei ein Regelkreis zwischen den Drehzahlreglern 5 und der Steuerung 6 dadurch geschlossen wird, dass die Steuerung 6 über die gezeichnete, elektrische Verbindung nicht nur Sollwerte abgibt, sondern über die Drehzahlregler 5 als Zwischenstation auch Positions-Ist-Werte aus den Gebern an den Antrieben 4 erhält.

In dem in Figur 1 gezeichneten Zustand befindet sich der hintere Zug 2 neben der Beladestation 8. Von seinen insgesamt fünf Stück Trägern 3 weisen drei Stück nach oben und sind bereits mit einem Gegenstand 1 beladen. Die anderen beiden Träger 3 des vorderen Zuges 3 befinden sich im gezeichneten Zustand noch an der Unterseite und sind noch unbeladen.

Der zweite, vordere Zug 2, der sich in der Nähe der Entladestation 9 befindet, besteht insgesamt nur aus vier Stück Trägern 3, von denen zwei bereits entladen sind und bereits wieder nach unten weisen. Die anderen beiden Träger tragen jeweils noch einen Gegenstand 1. Davon befindet sich ein Gegenstand 1 gerade im Zustand des Überganges vom Träger 3 auf die Entladestation 9, berührt also hinten noch den Träger 3 und vorne bereits die Entladestation 9.

In Figur 1 ist leicht nachvollziehbar, dass im gezeichneten Moment der Übergabe eines Gegenstandes von einem Zug 2 auf die Entladestation 9 die Geschwindigkeit des Zuges 2 und die Geschwindigkeit der Entladestation 9 exakt gleich sein sollten. Nur dann gleitet der Gegenstand 1 nicht auf der Oberfläche der Entladestation 9 sondern berührt sie exakt in dem Punkt, der für die Gruppierung erforderlich ist.

In diesem Zustand laufen also der Zug 2 und die Entladestation 9 vollkommen synchron. Um der Steuerung 6 die Regelung dieses Synchronlaufes zu ermöglichen, ist der Abführgeber 91 mit der Entladestation 9 mechanisch verbunden und übermittelt die Geschwindigkeit der Entladestation 9 an die Steuerung 6. Die Steuerung 6 erhält über den Geber am Antrieb 4 mit dem Drehzahlregler 5 als Zwischenstation auch den Geschwindigkeits-Istwert des Zuges 2 und kann durch Vergleich zwischen den Informationen aus diesen beiden Gebern den Synchronlauf regeln.

In Figur 1 wird auch deutlich, dass sich der aktuell noch im Übergang befindliche Gegenstand 1 alsbald ausschließlich auf der Entladestation 9 abstützen wird und dann den Zug 2 bereits nicht mehr berühren wird. In diesem Zeitpunkt wird der nächste Gegenstand 1 jedoch noch immer ausschließlich vom Endlosband 7 abgestützt, hat also noch keine Verbindung zur Entladestation 9. Bis der - in diesem Beispiel letzte - Gegenstand des Zuges 2 in Kontakt mit der Entladestation 9 kommen wird, besteht also keine direkte Verbindung zwischen dem Zug 2 und der Entladestation 9. In diesem Zeitfenster kann der Zug 2 gegenüber der Synchrongeschwindigkeit verzögert oder beschleunigt werden, um das Eintreffen eines Gegenstandes 1 auf der Entladestation 9 zu verzögern oder vorzuziehen und damit den Abstand zum jeweils vorhergehenden Gegenstand 1 zu verändern und auf das für die Gruppierung erforderliche Maß einzustellen.

Bei dem in Figur 1 gezeichneten Beispiel sind auf der Entladestation 9 die Abstände zwischen den Gegenständen 1 größer als der Abstand zwischen den Trägern 3 auf dem Endlosband. In diesem Beispiel muss also in den "kontaktfreien" Zeitfenstern die Geschwindigkeit des Zuges 2 kurzzeitig etwas gedrosselt werden.

In Figur 1 ist nicht nur ein einfacher, synchroner Gleichlauf demonstriert, sondern auch der aufwendigere, winkelsynchrone Gleichlauf. Dafür ist es erforderlich, dass die Steuerung 6 die jeweiligen Phasenwinkel erfassen kann. Dafür dient der Sensor 82, der das Eintreffen eines Gegenstandes 1 in der Beladestation 9 erfasst. Der Sensor 82 ist hier als Lichtschranke ausgeführt, deren Lichtstrahl durch eine gestrichelte Linie dargestellt ist und sich auf der anderen Seite des zuführenden Bandes in einem Reflektor spiegelt und dadurch wieder in die Sende-/Empfangseinheit zurückgeführt wird. Des Weiteren ist in Figur 1 die elektrische Verbindung zwischen dem Sensor 82 und der Steuerung 6 eingezeichnet.

Als Beispiel für einen Gegenstand 1 ist eine zylindrische Scheibe, z. B. ein Käselaib, mit gestrichelten Linien dargestellt. Leicht nachvollziehbar ist, dass er bei der Bewegung des zuführenden Transportbandes alsbald den Sensor 8 erreicht, im gezeichneten Beispiel also die Lichtschranke durchbricht, woraufhin eine Meldung an die Steuerung 6 abgegeben wird, die den dann jeweils zuständigen Drehzahlregler 5 aktiviert, so dass ein Träger 3 in Bewegung gesetzt wird und in die Nähe des Zulaufbandes eilt, um dort den soeben eingetroffenen Gegenstand 1 aufzunehmen. Durch die Erfassung des Phasenwinkels kann das Eintreffen des Trägers 3 in der Beladestation 8 so justiert werden, dass der Käselaib weder auf den Träger herunterfällt noch vom Träger unsanft nach oben gestoßen wird, sondern ruckfrei und frei von überflüssigen Gleitbewegungen vom Träger 3 aufgenommen wird.

In Figur 1 sind bereits drei Käselaibe(gestrichelt dargestellt) auf das Endlosband 7 des hinteren Zuges 2 aufgeladen und liegen an drei Trägern 3 an. An die beiden anderen Träger 3, die sich noch unterhalb der Arbeitsfläche 2 befinden, werden in den nächsten beiden Schritten jeweils Gegenstände 1 angelegt, wovon in Figur 1 bereits einer auf der Beladestation zu sehe ist. Figur 1 verdeutlicht, dass der Zug 2 in diesem Betriebszustand dem Zuführgeber 81 als Master folgt.

Wenn alle Träger 3 des hinteren Zuges 2 mit einem Gegenstand 1 belegt sind, kann im nächsten Schritt durch eine Drehzahlerhöhung oder Drehzahlreduzierung des Antriebs 4 der gesamte hintere Zug 2 in einen gewünschten Abstand zu den vorhergehenden Gegenständen 1 des vorherigen Zuges 2 gebracht werden, die dann bereits den Mehrzuggruppierer verlassen haben und sich schon in der Entladestation befinden. Figur 1 verdeutlicht gut, dass der Zug 2 für diesen Schritt sinnvollerweise dem Geber an der Entladestation 9, dem so genannten Abführgeber 91 als Master folgt.

In Figur 1 ist ebenfalls nachvollziehbar, dass der vordere Zug 2 dann bereits seine sämtlichen Träger 3 auf die Unterseite des Mehrzuggruppierers verfahren haben muss, da sie andernfalls mit dem ersten Träger 3 des anderen Zuges kollidieren würden.

Der Zug 2 befindet sich dann kurzzeitig in einer Warteposition an der Unterseite. Aus dieser Warteposition heraus wird der unbeladene Zug 2 in der Beladestation 8 wieder mit Gegenständen 1 befüllt und anschließend in den gewünschten Abstand zum vorhergehenden Zug 2 gebracht. In Figur 1 wird nachvollziehbar, dass der Zug 2 in der unteren Warteposition bereits wieder auf den Zuführgeber 81 als Master umgeschaltet werden muss.

Von ihrer mechanischen Konstruktion her sind im gezeichneten Beispiel die beiden Endlosbänder 7 und die Träger 3 denkbar einfach gestaltet. Beide Endlosbänder 7 decken jeweils eine Hälfte der Breite der Träger 3 ab. Jeder Träger 3 ragt mit einer paddelartigen Verlängerung über das jeweils benachbarte Endlosband 7 herüber. Da auch die Gegenstände 1 von dem einen Endlosband 7 auf das benachbarte Endlosband 7 herüberragen und deshalb bei Drehzahlunterschieden der beiden Bänder auf dem benachbarten Endlosband 7 entlang gleiten müssen, muss die Oberfläche der Endlosbänder 7 sehr glatt sein, so dass jeder Träger 3 einen Gegenstand 1 auch mit einer Geschwindigkeitsdifferenz gegenüber dem Nachbarband bewegen kann. Um ein Verhaken der Gegenstände 1 zu vermeiden, sollten die Kanten der Glieder zu der in der Zeichnung sichtbaren Fuge hin geringfügig abgesenkt werden.

### Bezugszeichenliste

- 1: Gegenstand
- 2: Zug aus mehreren, mechanisch miteinander verbundenen Trägern 3
- 3: Träger zur Aufnahme eines Gegenstandes 1
- 4: Antrieb für einen Zug 2
- 5: Drehzahlregler, regelt einen Antrieb 4
- 6: Steuerung, gibt den Drehzahlreglern 5 ihren Sollwert vor
- 7: Endlosband, verbindet alle Träger 3 eines Zuges 2 mit einem Antrieb 4
- 8: Beladestation, zur Übergabe eines Gegenstandes 1 auf einen Träger 3
- 81: Zuführgeber, erfasst die Geschwindigkeit der Gegenstände 1 in der Beladestation 8
- 82: Sensor, erfasst das Eintreffen eines Gegenstandes 1 in der Beladestation 8
- 9: Entladestation, zum Entladen eines Trägers 3
- 91: Abführgeber, erfasst die Geschwindigkeit der Entladestation 9

## Patentansprüche

1. Mehrzuggruppierer zum Gruppieren von sequentiell zugeführten Gegenständen (1), bestehend aus
- wenigstens einer Beladestation (8) mit einem Zuführgeber (81),
- wenigstens einer Entladestation (9) mit einem Abführgeber (91) und
- wenigstens zwei Zügen (2),
wobei
- die Züge (2) aus mehreren, mechanisch miteinander verbundenen Trägern (3) bestehen und jeder Zug (2) durch je einen regelbaren Antrieb (4) bewegbar ist, der über jeweils einen Drehzahlregler (5) von einer zentralen Steuerung (6) ansteuerbar ist und
- von jeder Beladestation (8) Gegenstände (1) auf die Träger(3)übergebbar sind und
- in jede Entladestation (9) Gegenstände (1) von den Trägern (3) aus abladbar sind,
wobei
jeder Zug (2)
- während der Übergabe eines Gegenstandes (1) von der Beladestation (8) auf einen seiner Träger (3) synchron zum Zuführgeber (81) bewegbar ist, **dadurch gekennzeichnet, dass** sich jeder Zug
- während des Abladens eines Gegenstandes (1) in die Entladestation (9) synchron zum Abführgeber (91) bewegbar ist und
- zwischen den Abladevorgängen soweit beschleunigbar und verzögerbar ist, dass der Abstand zwischen zwei Gegenständen (1) dem durch die Gruppierung vorgegebenen Maß entspricht.

2. Mehrzuggruppierer nach dem vorhergehenden Anspruch 1,**dadurch gekennzeichnet, dass** der Zuführgeber (81) mechanisch mit der Beladestation (8) verbunden ist und elektrisch von der Steuerung (6) auswertbar ist.

3. Mehrzuggruppierer nach einem der vorhergehenden Ansprüche, **dadurch gekennzeichnet, dass** der Abführgeber (91) mechanisch mit der Entladestation (9) verbunden ist und elektrisch von der Steuerung (6) auswertbar ist.

4. Mehrzuggruppierer nach einem der vorhergehenden Ansprüche, **dadurch gekennzeichnet, dass** jeder Träger (3) während des Beladens so lange winkelsynchron zur Position eines Gegenstandes (1) in der Beladestation (8) bewegbar ist, wie der Gegenstand (1) sowohl die Beladestation (8) als auch den Träger (8) berührt.

5. Mehrzuggruppierer nach einem der vorhergehenden Ansprüche, **dadurch gekennzeichnet, dass** jeder, in der Beladestation (8) eintreffende Gegenstand (1) mittels eines Sensors (82) von der Steuerung(6) erfassbar ist.

6. Mehrzuggruppierer nach einem der vorhergehenden Ansprüche, **dadurch gekennzeichnet, dass** jeder Träger (3) während des Entladens solange winkelsynchron zur Position einer Aufnahmevorrichtung in der Entladestation (9) bewegbar ist, wie der Gegenstand (1) sowohl den Träger(3) als auch die Aufnahmevorrichtung berührt.

7. Mehrzuggruppierer nach einem der vorhergehenden Ansprüche, **dadurch gekennzeichnet, dass** der Übergang jedes beladenen oder jedes entladenen Zuges (2) von der Bewegung synchron zum Zuführgeber (81) auf die Bewegung synchron zum Abführgeber (91) durch die Steuerung (6) kontinuierlich interpolierbar ist und dabei die Beschleunigungsänderung begrenzbar ist.

8. Mehrzuggruppierer nach einem der vorhergehenden Ansprüche, **dadurch gekennzeichnet, dass** jeder Träger (3) eines Zuges (2) mit einem Endlosband (7)verbunden ist, das parallel zu wenigstens einem anderen Endlosband (7) verläuft, das zumindest teilweise etwa horizontal oder etwa vertikal verlaufen kann.

9. Mehrzuggruppierer nach einem der vorhergehenden Ansprüche, **dadurch gekennzeichnet, dass** sich jeder Träger (3) eines Zuges (2) direkt oder indirekt auf wenigstens einer Schiene abstützt, die in einer endlosen Schleife zwischen Beladestation (8) und Entladestation (9) verläuft.

10. Mehrzuggruppierer nach einem der vorhergehenden Ansprüche, **dadurch gekennzeichnet, dass** die Abstände mehrerer, benachbarter Tragen (3) zueinander ein bestimmtes Muster aufweisen oder gleich sind.

11. Mehrzuggruppierer nach einem der vorhergehenden Ansprüche, **dadurch gekennzeichnet, dass** auf wenigstens einem Endlosband (7) eine größere Anzahl von Befestigungspunkten für Träger (3) vorhanden sind, als Träger (3) mit dem Endlosband (7) verbunden sind, wobei der Abstand zwischen zwei Befestigungspunkten auf dem Endlosband stufenlos veränderbar sein kann und wobei jeder Befestigungspunkt aus zwei zueinander beabstandeten Verbindungen bestehen kann.

12. Mehrzuggruppierer nach einem der vorhergehenden Ansprüche, **dadurch gekennzeichnet, dass** das Endlosband (7)
- ein Transportband oder
- ein Zahnriemen oder
- eine Kette oder
- ein Seil oder
- ein Flachriemen oder
- ein kugelbestücktes Seil
ist.

13. Mehrzuggruppierer nach einem der vorhergehenden Ansprüche, **dadurch gekennzeichnet, dass** die Achsen der Antriebe (4) etwa horizontal oder etwa vertikal ausgerichtet sind.

14. Mehrzuggruppierer nach einem der vorhergehenden Ansprüche, **dadurch gekennzeichnet, dass** die Trägen (3)
- als Fächer oder
- als Wanne oder
- als Mulde oder
- als Eimer oder
- als Schaufel oder
- als Platte
ausgebildet sind.

15. Mehrzuggruppierer nach einem der vorhergehenden Ansprüche, **dadurch gekennzeichnet, dass** darin
- eine Bearbeitungsstation und/oder
- eine Wendestation und/oder
- eine weitere Beladestation (8) und/oder
- eine weitere Entladestation (9) und/oder
andere zusätzliche Stationen integriert sind.

16. Mehrzuggruppierer nach einem der vorhergehenden Ansprüche, **dadurch gekennzeichnet, dass** eine Beladestation (8)
- als Transportband öder
- als Eimerkette oder
- als Kette mit Trägern (3) oder
- als Rad mit Trägern (3) oder
- als Schieber oder
- als Förderschnecke oder
- als Handlingsystem oder
- als Roboter oder
- als Katapult oder
- als Rutsche
ausgebildet ist.

17. Anwendung eines Mehrzuggruppierers nach einem der vorhergehenden Ansprüche, **dadurch gekennzeichnet, dass**
- beim Entladen der Gegenstände (1) von den Trägern(3)eines Zuges (2) auf die Entladestation (9) und
- außerhalb der Zeitabschnitte, während derer jeweils ein Gegenstand (1) noch einen Träger (3) und schon die Entladestation (9) berührt die Steuerung (6) die Drehzahlsollwerte für den Drehzahlregler (5) des Antriebs (4) des jeweiligen Zuges (2) gegenüber dem Synchronlauf zwischen Träger (3) und Entladestation (9) soweit erhöht und erniedrigt, dass sich der für die gewünschte Gruppierung der Gegenstände (1) erforderliche Abstand zwischen zwei benachbarten Gegenständen ergibt.

18. Anwendung eines Mehrzuggruppierers nach Anspruch 17, **dadurch gekennzeichnet, dass** ein Strom von in verschiedenen Abständen zueinander eintreffenden Gegenständen (1) in einen Strom
- von Gegenständen (1) mit jeweils gleichem Abstand
oder
- von Gruppen von Gegenständen (1) zueinander umgewandelt wird, wobei innerhalb der Gruppe
- die Abstände jeweils gleich sind
oder
- sich gemäß einem vorgewählten Muster voneinander
unterscheiden.

19. Anwendung eines Mehrzuggruppierers nach Anspruch 17 oder 18, **dadurch gekennzeichnet, dass** bestimmte, vordefinierte Träge (3) nicht beladen werden.

20. Anwendung eines Mehrzuggruppierers nach einem der Ansprüche 17 bis 19, **dadurch gekennzeichnet, dass** für jeden neu eintreffenden Gegenstand (1) ein unbeladener Trägen (3) rechtzeitig bereitgestellt wird.

21. Anwendung eines Mehrzuggruppierers nach einem der Ansprüche 17 bis 20 eines Mehrzuggruppierers nach Anspruch 15, **dadurch gekennzeichnet, dass** in einer zusätzlichen Beiadestation (8) weitere Gegenstände (1) auf zuvor noch freie oder noch nicht vollständig beladene Träger (3) aufgeladen werden.

22. Anwendung eines Mehrzuggruppierers nach einem der vorhergehenden Ansprüche 17 bis 21, **dadurch gekennzeichnet, dass** eine nur teilweise gruppierte und/oder bearbeitete Gruppe von Gegenständen (1) sofort in eine Entladestation (9) gefahren wird.

23. Anwendung eines Mehrzuggruppierers nach einem der vorhergehenden Ansprüche 17 bis 22, **dadurch gekennzeichnet, dass** der Antrieb(4)eines Zuges (2) sofort verzögert wird, wenn er auf einen anderen Zug (2)aufzulaufen droht, dessen Bearbeitung oder Beladung noch nicht abgeschlossen ist.

24. Anwendung eines Mehrzuggruppierers nach einem der vorhergehenden Ansprüche 17 bis 23, **dadurch gekennzeichnet, dass** bei mehreren Zügen (2), die vor einer Station warten, alle wartenden Züge auf den Geber dieser Station als Master umgeschaltet werden uns sich synchron zu dem in der Station befindlichen Zug (2) bewegen.

25. Anwendung eines Mehrzuggruppierers nach einem der vorhergehenden Ansprüche 17 bis 24, **dadurch gekennzeichnet, dass** ein Trägen (3) im Stillstand mit mehr als einem Gegenstand (1) beladen wird und erst nach vollständiger Beladung weiter bewegt wird.

## Claims

1. Multiplex grouping device for grouping sequentially fed articles (1), comprising
- at least one loading station (8), which comprises a feed sensor (81),
- at least one unloading station (9), which comprises a discharge sensor (91), and
- at least two conveying means (2),
the conveying means (2) comprising a plurality of mechanically interconnected carriers (3) and each conveying means (2) being movable by means of a respective controllable drive (4), which can be activated by a central controller (6) via a respective rotational speed regulator (5), and
- articles (1) can be transferred onto the carriers (3) from each loading station (8) and
- articles (1) can be transferred from the carriers (3) into each unloading station (9)
wherein each conveying means (2)
- during transfer of an article (1) from the loading station (8) onto a carrier (3) is movable synchronously with the feed detector (81), and each conveying means,
- during the unloading of an article (1) into the unloading station (9) is movable synchronously with the discharge detector (91) and
- between the unloading processes can be accelerated and delayed to the extent that the spacing between two articles (1) corresponds to the dimension determined by the grouping.

2. Multiplex grouping device according to the preceding claim 1, **characterised in that** the feed detector (81) is mechanically connected to the loading station (8) and can be electrically evaluated by the controller (6).

3. Multiplex grouping device according to one of the preceding claims, **characterised in that** the discharge detector (91) is mechanically connected to the unloading station (9) and can be electrically evaluated by the controller (6).

4. Multiplex grouping device according to one of the preceding claims, **characterised in that** each carrier (3), during loading, is movable in the loading station (8), angularly synchronised with the position of an article (1), as long as the article (1) is in contact with both the loading station (8) and the carrier (3).

5. Multiplex grouping device according to one of the preceding claims, **characterised in that** each article (1) arriving in the loading station (8) can be is registered by the controller (6) by means of a sensor (82).

6. Multiplex grouping device according to one of the preceding claims, **characterised in that** each carrier (3), during unloading, is movable in the unloading station (9), angularly synchronised with the position of a receiving device as long as the article (1) is in contact with both the carrier (3) and the receiving device.

7. Multiplex grouping device according to one of the preceding claims, **characterised in that** the transition of each loaded or of each unloaded conveying means (2) from movement synchronous with the feed detector (81) to movement synchronous with the discharge detector (91) can be continually interpolated by means of the controller (6) and thereby the acceleration change can be limited.

8. Multiplex grouping device according to one of the preceding claims, **characterised in that** each carrier (3) of a conveying means (2) is connected to an endless belt (7), which runs parallel to at least one other endless belt (7), which may run at least partly approximately horizontally or approximately vertically.

9. Multiplex grouping device according to one of the preceding claims, **characterised in that** each carrier (3) of a conveying means (2) is directly or indirectly supported on at least one rail, which extends in an endless loop between the loading station (8) and unloading station (9).

10. Multiplex grouping device according to one of the preceding claims, **characterised in that** the spacings of a plurality of adjacent carriers (3) with respect to one another have a particular pattern or are identical.

11. Multiplex grouping device according to one of the preceding claims, **characterised in that**, on at least one endless belt (7), a larger number of fastening points for carriers (3) are present than carriers (3) are connected to the endless belt (7), wherein the spacing between two fastening points on the endless belt may be infinitely variable and wherein each fastening point may consist of two connections which are spaced from one another.

12. Multiplex grouping device according to one of the preceding claims, **characterised in that** the endless belt (7) is
- a conveyor belt or
- a toothed belt or
- a chain or
- a cable or
- a flat belt or
- a cable fitted with balls.

13. Multiplex grouping device according to one of the preceding claims, **characterised in that** the axes of the drives (4) are approximately horizontally oriented or are approximately vertically oriented.

14. Multiplex grouping device according to one of the preceding claims, **characterised in that** the carriers (3) are designed
- as compartments or
- as a trough or
- as a depression or
- as a bucket or
- as a shovel or
- as a plate.

15. Multiplex grouping device according to one of the preceding claims, **characterised in that**
- a processing station and/or
- a turning station and/or
- a further loading station (8) and/or
- a further unloading station (9) and/or
other additional stations are integrated therein.

16. Multiplex grouping device according to one of the preceding claims, **characterised in that** a loading station (8) is designed as
- a conveyor belt or
- a bucket chain or
- a chain with carriers (3) or
- a wheel with carriers (3) or
- a slider or
- a conveying screw or
- a handling system or
- a robot or
- a catapult or
- a chute.

17. Application of a multiplex grouping device according to one of the preceding claims, **characterised in that**
- during unloading of the articles (1) from the carriers (3) of a conveying means (2) onto the unloading station (9), and
- outside the time sections during which an article (1) in each case is still in contact with a carrier (3) and is already in contact with the unloading station (9), the controller (6) increases and decreases the rotational speed setpoint values for the rotational speed regulator (5) of the drive (4) of the conveying means (2) in each case with respect to the synchronous running between the carrier (3) and unloading station (9), such that the spacing between two adjacent articles necessary for the desired grouping of the articles (1) is provided.

18. Application of a multiplex grouping device according to claim 17, **characterised in that** a stream of articles (1) arriving at various spacings from one another is transformed into a stream
- of articles (1) having, in each case, the same spacing from one another
or
- of groups of articles (1), wherein, within the group,
- the spacings are in each case identical to one another
or
- differ from one another according to a preselected pattern.

19. Application of a multiplex grouping device according to claim 17 or 18, **characterised in that** particular predefined carriers (3) are not loaded.

20. Application of a multiplex grouping device according to one of claims 17 to 19, **characterised in that**, for each newly arriving article (1), an unloaded carrier (3) is provided in good time.

21. Application of a multiplex grouping device according to claims 17 to 20, of a multiplex grouping device according to claim 15, **characterised in that**, in an additional loading station (8), further articles (1) are loaded onto carriers (3) that were previously still free or have not yet been completely loaded.

22. Application of a multiplex grouping device according to one of the preceding claims 17 to 21, **characterised in that** an only partly grouped and/or processed group of articles (1) is immediately run into an unloading station (9).

23. Application of a multiplex grouping device according to one of the preceding claims 17 to 22, **characterised in that** the drive (4) of a conveying means (2) is immediately retarded when it threatens to collide with another conveying means (2), the processing or loading of which is not yet complete.

24. Application of a multiplex grouping device according to one of the preceding claims 17 to 23, **characterised in that**, in the case of a plurality of conveying means (2), which wait in front of a station, all waiting conveying means are switched to the detector of this station as master, and move synchronously with the conveying means (2) located in the station.

25. Application of a multiplex grouping device according to one of the preceding claims 17 to 24, **characterised in that** a stationary carrier (3) is loaded with more than one article (1) and is only moved further after complete loading.

## Revendications

1. Regroupeur multi-trains destiné à regrouper des objets (1) amenés séquentiellement, consistant en
■ au moins une station de chargement (8) avec un codeur d'amenée (81),
■ au moins une station de déchargement (9) avec un codeur d'évacuation (91) et
■ au moins deux trains (2)
sachant que
■ les trains (2) consistent en plusieurs supports (3) mécaniquement reliés les uns aux autres, chaque train (2) pouvant être déplacé par un entraînement (4) pouvant être régulé, chacun pouvant être piloté par une commande centrale (6) par l'intermédiaire d'un régulateur de régime (5),
■ des objets (1) pouvant être remis sur les supports ((3) depuis chaque station de chargement (8),
■ des objets (1) pouvant être déchargés des supports (3) dans chaque station de chargement (8)
sachant que chaque train (2)
■ peut être déplacé, pendant la remise d'un objet (1), en synchronisation avec le codeur d'amenée (81) de la station de chargement (8) à un de ses supports (3), chaque train
■ pouvant être déplacé, pendant la remise d'un objet (1), en synchronisation avec le codeur d'évacuation (91), dans la station de déchargement (9), et
■ pouvant être accéléré et retardé, entre les opérations de déchargement, de façon à ce que la distance entre deux objets (1) corresponde entre deux objets (1) corresponde à la dimension prescrite par le regroupement.

2. Regroupeur multi-trains selon la revendication précédente 1, **caractérisé par le fait que** le codeur d'amenée (81) est relié mécaniquement avec la station de chargement (8 et peut être évalué électriquement par la commande (6).

3. Regroupeur multi-trains selon une des revendications précédentes, **caractérisé par le fait que** le codeur d'évacuation (91) est relié mécaniquement à la station de déchargement (9) et peut être évalué électriquement par la commande (6).

4. Regroupeur multi-trains selon une des revendications précédentes, **caractérisé par le fait que** chaque support (3) peut être déplacé pendant le chargement, en synchronisation angulaire par rapport à la position d'un objet (1), dans la station de chargement (8) jusqu'à ce que l'objet (1) touche à la fois la station de chargement (8) et le support (3).

5. Regroupeur multi-trains selon une des revendications précédentes, **caractérisé par le fait que** chaque objet (1) arrivant dans la station de chargement (8) peut être enregistré par la commande (6) au moyen d'un capteur (82).

6. Regroupeur multi-trains selon une des revendications précédentes, **caractérisé par le fait que** chaque support (3) peut être déplacé en synchronisation angulaire par rapport au dispositif de réception dans la station de déchargement (9) jusqu'à ce que l'objet (1) touche à la fois le support (3) et le dispositif de réception.

7. Regroupeur multi-trains selon une des revendications précédentes, **caractérisé par le fait que** le passage de chaque train (2) chargé ou de chaque train (2) déchargé peut être interpolé de façon continue, à partir de son mouvement en synchronisation avec le codeur d'amenée (81), vers son mouvement en synchronisation avec le codeur d'évacuation (91), le changement d'accélération pouvant être limité à cette occasion.

8. Regroupeur multi-trains selon une des revendications précédentes, **caractérisé par le fait que** chaque support (3) d'un train (2) est relié à la bande sans fin (7) d'un train (2) qui court parallèlement à au moins une autre bande sans fin (7) capable de suivre un tracé au moins partiellement à peu près horizontal ou à peu près vertical.

9. Regroupeur multi-trains selon une des revendications précédentes, **caractérisé par le fait que** chaque support (3) d'un train (2) court directement ou indirectement en s'appuyant sur au moins un rail qui court dans une boucle sans fin entre la station de chargement (8) et la station de déchargement (9).

10. Regroupeur multi-trains selon une des revendications précédentes, **caractérisé par le fait que** les distances de plusieurs supports (3) voisins les uns par rapport aux autres présentent un certain modèle ou sont identiques.

11. Regroupeur multi-trains selon une des revendications précédentes, **caractérisé par le fait qu'**il y a, au moins sur une bande sans fin (7), un nombre élevé de points de fixation destinés à des supports (3), qui sont reliés en tant que supports (3) avec la bande sans fin (7), sachant que la distance entre les points de fixation peut être changée en continu sur la bande sans fin et sachant que chaque point de fixation peut consister en deux liaisons pouvant être placées à une certaine distance l'une par rapport à l'autre.

12. Regroupeur multi-trains selon une des revendications précédentes, **caractérisé par le fait que** la bande sans fin (7) est
■ une bande de transport ou
■ une courroie crantée ou
■ une chaîne ou
■ un câble ou
■ un câble équipé d'une sphère.

13. Regroupeur multi-trains selon une des revendications précédentes, **caractérisé par le fait que** les axes des entraînements (4) sont orientés à peu près horizontalement ou verticalement.

14. Regroupeur multi-trains selon une des revendications précédentes, **caractérisé par le fait que** les supports (3) sont formés
■ en tant que casiers ou
■ en tant que cuve ou
■ en tant que benne ou
■ en tant que seau ou
■ en tant que pelle ou
■ en tant que plaque.

15. Regroupeur multi-trains selon une des revendications précédentes, **caractérisé par le fait que**
■ qu'une station de traitement et/ou
■ une station de retournement et/ou
■ une autre station de chargement (8) et/ou
■ une autre station de déchargement (9) et/ou une autre station supplémentaire y est intégrée.

16. Regroupeur multi-trains selon une des revendications précédentes, **caractérisé par le fait qu'**une station de chargement (8) est formée
■ en tant que bande de transport ou
■ en tant que chaîne de seaux ou
■ en tant que chaîne avec supports (3) ou
■ en tant que roue avec supports (3) ou
■ en tant que tiroir ou
■ en tant que vis de convoyage ou
■ en tant que système de manutention ou
■ en tant que robot ou
■ en tant que catapulte ou
■ en tant que glissière.

17. Application d'un regroupeur multi-trains selon une des revendications précédentes, **caractérisé par le fait que**
■ lors du déchargement des objets (1) depuis les supports (3) d'un train (2) sur la station de déchargement (9) et
■ en dehors des intervalles de temps pendant lesquels un objet (1) touche encore un support (3) et déjà la station de déchargement (9), la commande (6) augmente et diminue les valeurs de consigne de régime du régulateur du régime de rotation (5) de l'entraînement (4) de chaque train respectif (2) par rapport à la course synchrone entre les supports (3) et la station de déchargement (9) jusqu'à ce que la distance nécessaire entre deux objets voisins pour le regroupement souhaité des objets (1) soit atteint.

18. Application d'un regroupeur multi-trains selon la revendication 17, **caractérisé par le fait qu'**un flux d'objets (1) arrivant à différentes distances les uns des autres est converti en un flux
■ d'objets (1)
ou
■ de groupes d'objets (1) ayant à chaque fois la même distance, sachant qu'à l'intérieur d'un groupe
■ les distances sont à chaque fois les mêmes
ou
■ se différencient les unes des autres selon un modèle préalablement choisi.

19. Application d'un regroupeur multi-trains selon la revendication 17 ou 18, **caractérisée par le fait que** certains supports (3) ne sont pas chargés.

20. Application d'un regroupeur multi-trains selon une des revendications 17 à 19, **caractérisée par le fait qu'**un support (3) non chargé est mis à disposition en temps utile pour chaque objet (1) arrivant nouvellement.

21. Application d'un regroupeur multi-trains selon une des revendications 17 à 20, **caractérisée par le fait que** dans une station de chargement (8) supplémentaire, d'autres objets (1) sont chargés sur des supports encore libres ou non encore complètement chargés.

22. Application d'un regroupeur multi-trains selon une des revendications précédentes 17 à 21, **caractérisée par le fait qu'**un groupe d'objets (1) seulement en partie regroupés et/ou traités est immédiatement amené à une station de déchargement (9).

23. Application d'un regroupeur multi-trains selon une des revendications précédentes 17 à 22, **caractérisée par le fait que** l'entraînement (4) d'un train (2) est immédiatement retardé s'il menace de heurter un autre train (2) dont le traitement ou le chargement n'est pas encore achevé.

24. Application d'un regroupeur multi-trains selon une des revendications précédentes 17 à 23, **caractérisée par le fait que**, si plusieurs trains (2) attendent devant une station, tous les trains (2) en attente sont commutés sur le codeur de cette station en tant que maître, et se déplacent de façon synchrone par rapport au train qui se trouvent dans la station.

25. Application d'un regroupeur multi-trains selon une des revendications précédentes 17 à 24, **caractérisée par le fait qu'**un support (3) à l'arrêt est chargé avec plus d'un objet (1) et n'est déplacé qu'après avoir été complètement chargé.
